# EUROPEAN PATENT APPLICATION

(11) **EP 1 883 002 A2**
(43) Date of publication of application: **30.01.2008**
(21) Application number: 07111949.9
(22) Date of filing: 06.07.2007
(51) Int. Cl.: G06F 1/16

(54) **Display apparatus having board assembly unit**

(30) Priority: 20.07.2006 KR 20060068198
(71) Applicant: Samsung Electronics Co., Ltd., Suwon-si, Gyeonggi-Do (KR)
(72) Inventor: Kim, Seong-soo, Salgugol 7-danji Hyundai Apt. 22-1402, Gyeonggi-do (KR)
(74) Representative: Grootscholten, Johannes A.M.

(57) **Abstract**

A display apparatus including a display main body, a main body casing which covers the display main body, and a board assembly unit which is coupled to the main body casing and which supports an input signal board including an input signal terminal operative to be connected with an input signal cable of an external device, and a storing medium connecting board including a storing medium connecting part operative to be coupled with an external storing medium.

## Description

### BACKGROUND OF THE INVENTION

### Field of Invention

An apparatus consistent with the present invention relates to a display apparatus and, more particularly, to a display apparatus improved in a connecting configuration of a functional board connected with an external device.

### Description of the Related Art

A display apparatus displays an image. The display apparatus may comprise a TV, a monitor, etc. The display apparatus is classified into a CRT (cathode ray tube), an LCD (liquid crystal display), a PDP (plasma display panel) and a DLP (digital lighting processing) according to a displaying method of a signal processed image information provided to a screen.

A display apparatus using the PDP has become popular in order to have the advantage of slimness, a large-sized display, etc. Especially, a PDP television has a thin thickness to be mounted on a wall, and accordingly, improves space utilization. Accordingly, the demands of users have increased.

Recently, as an external device such as a digital camera, a camcorder, a cellular phone, etc. becomes popular, the display apparatus has started to include a functional board of various types. The function board is connected with the external device, receives an audio signal, a video signal and an image signal of an image data stored in the external device, and displays the image data on a screen of the display apparatus.

However, in a conventional display apparatus, a functional board including a connecting terminal connected with an external device is provided at a rear part of the display apparatus. When a user connects the external device to the display apparatus, the user needs to detach the display apparatus from a wall, or rotate the display apparatus supported on a table, etc.

Also, the conventional display apparatus does not include a functional board which is capable of being connected with a memory card of various types mounted to an external device such as a cellular phone, a camcorder, a digital camera, etc. Accordingly, a user needs to directly connect the external device to a connecting terminal.

Also, when functional boards of different types including the connecting terminal communicate with a main board of a main body, an EMI (electromagnetic interference) is caused. The EMI causes malfunction of circuits provided to the functional board. Also, the EMI causes noises so that a noise image is displayed on the screen. Still further, the EMI leaks to the outside and may harm a user.

### SUMMARY OF THE INVENTION

Accordingly, it is an aspect of the present invention to provide a display apparatus having different types of functional boards disposed thereon at an easily accessible position, thereby improving convenience of a user.

It is an aspect of the present invention to provide a display apparatus which intercepts an EMI generated from a main body, thereby operating in a stable manner.

The foregoing and/or other aspects of the present invention can be achieved by providing a display apparatus comprising a display main body, a main body casing which covers the display main body, and a board assembly unit which is coupled to the main casing and which supports an input signal board comprising an input signal terminal operative to be connected with an input signal cable for receiving an input signal of an external device, and a storing medium connecting board comprising a storing medium connecting part operative to be coupled with an external storing medium.

According to an exemplary embodiment of the present invention, the board assembly unit is coupled to a side of the main body casing so that the input signal terminal and the storing medium connecting part are exposed.

According to an exemplary embodiment of the present invention, the input signal comprises at least one of an audio signal and a video signal.

According to an exemplary embodiment of the present invention, the input signal terminal comprises at least one of a video terminal for receiving a video signal of an external device, an audio terminal receiving an audio signal of an external device, a smart card mounting part to which a smart card is operative to be mounted, and an image signal terminal for receiving an image signal of an external device.

According to an exemplary embodiment of the present invention, the storing medium connecting part comprises at least one of a USB connector to which a USB storing device is operative to be connected, an SD card reader to which an SD card is operative to be mounted, and a CF card reader to which a CF card is operative to be mounted.

According to an exemplary embodiment of the present invention, the board assembly unit comprises: a lower casing mounted with the input signal board and the storing medium connecting board; an upper casing coupled with the lower casing so that an opened part thereof is formed in one side; and a cover member coupled to the lower casing and the upper casing and covering the opened part.

According to an exemplary embodiment of the present invention, the lower casing comprises an input signal board coupling part and a storing medium connecting board coupling part to which the input signal board and the storing medium connecting board are respectively mounted.

According to an exemplary embodiment of the present invention, one of the input signal board coupling part and the storing medium connecting board coupling part is coupled together with the cover member and upper casing.

According to an exemplary embodiment of the present invention, the upper casing comprises material capable of intercepting an electromagnetic interference (EMI) generated from the display main body.

According to an exemplary embodiment of the present invention, the lower casing comprises material capable of intercepting an electromagnetic interference (EMI) generated from the display main body.

According to an exemplary embodiment of the present invention, the upper casing comprises a board cover part covering the input signal board and the storing medium connecting board mounted to the lower casing, and a front cover part bent from the board cover part to correspond to the cover member.

According to an exemplary embodiment of the present invention, the cover member comprises an insertion hole having shapes corresponding to the input signal terminal and the storing medium connecting part so that the input signal terminal provided to the input signal board and the storing medium connecting part provided to the storing medium connecting board protrude outside the main body casing.

The foregoing and/or other aspects of the present invention can be achieved by providing a display apparatus, comprising: a display main body; a main body casing which accommodates the display main body; and a board assembly unit provided to the main body casing and which supports an input signal board comprising an input signal terminal operative to be connected with an input signal cable of an external device, and a storing medium connecting board comprising a storing medium connecting part operative to be coupled with an external storing medium, said board assembly unit intercepting an electromagnetic interference (EMI) that is flowing toward the input signal board and the storing medium connecting board.

According to an exemplary embodiment of the present invention, the board assembly unit comprises: a lower casing which supports the input signal board and the storing medium connecting board; and an upper casing corresponding to the lower casing, and covering the input signal board and the storing medium connecting board.

According to an exemplary embodiment of the present invention, the display main body comprises one of a liquid crystal display (LCD) module and a plasma display panel (PDP) module.

According to an exemplary embodiment of the present invention, the board assembly unit is coupled to a side of the main body casing so that the input signal terminal and the storing medium connecting part are exposed.

According to an exemplary embodiment of the present invention, the input signal board and the storing medium connecting board are parallel coupled to the lower casing.

According to an exemplary embodiment of the present invention, the input signal board and the storing medium connecting board are stacked so as to be coupled to the lower casing.

### BRIEF DESCRIPTION OF THE DRAWINGS

The above and/or other aspects of the present invention will become apparent and more readily appreciated from the following description of the exemplary embodiments, taken in conjunction with the accompany drawings, in which:
FIG. 1 is a perspective view illustrating a display apparatus according to a first embodiment of the present invention;
FIG. 2 is a perspective view illustrating a board supporting unit according to the first embodiment of the present invention;
FIG. 3 is an exploded perspective view illustrating a board assembly unit in FIG. 2;
FIGS. 4a - 4g illustrate an assembling process of the board assembly unit in FIG. 2; and
FIG. 5 is an exploded perspective view illustrating a board assembly unit according to a second embodiment of the present invention.

### DETAILED DESCRIPTION OF EXEMPLARY EMBODIMENTS OF THE INVENTION

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures.

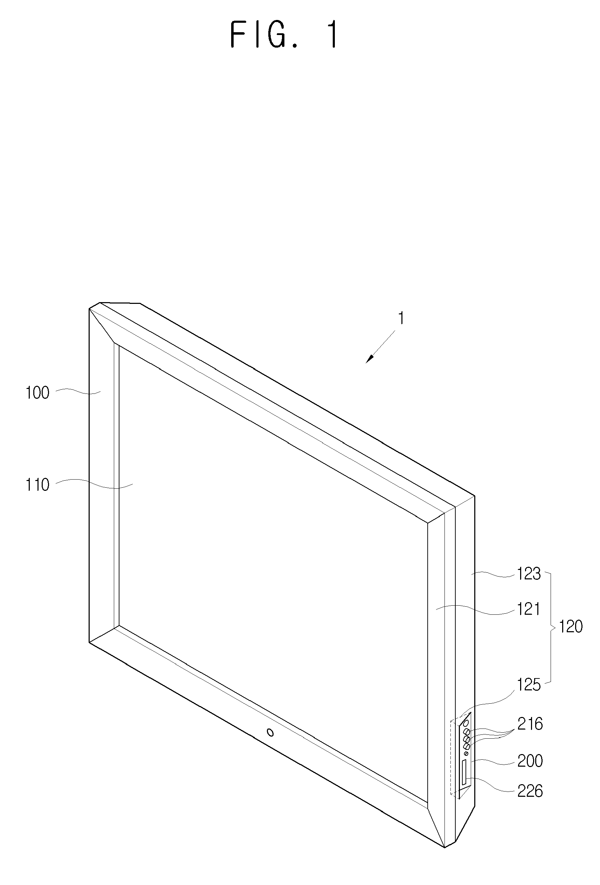

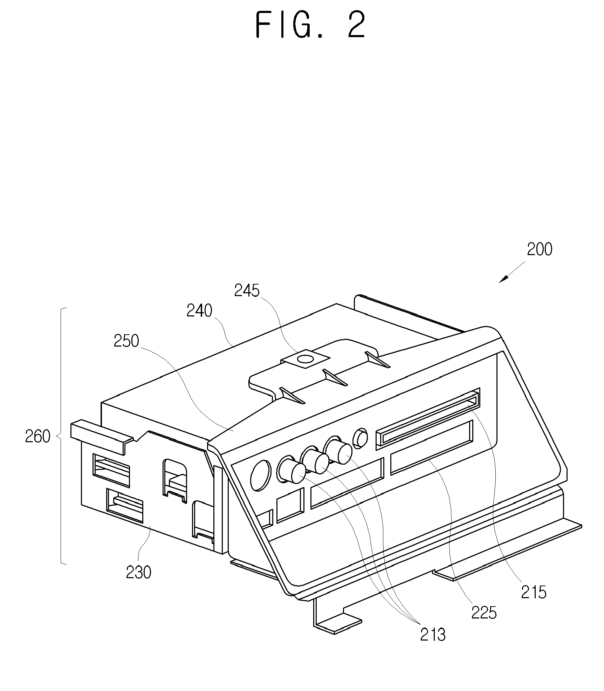

As shown in FIGs. 1 and 2, a display apparatus 1 according to a first embodiment of the present invention includes a display main body 100 including a screen 110 displaying an image, a main body casing 120 supporting the screen 110 and the display main body 100, and a board assembly unit 200 supporting a functional board 210 and 220 and coupled to a part of the main body casing 120.

The screen 110 has a rectangular planar shape, and displays an image. The screen 110 may comprise an LCD, a CRT, a PDP, etc. according to an image displaying type.

The display main body 100 includes a supporting frame (not shown) supporting the screen 110, a main board (not shown) facing the screen 110, and a plurality of driving circuit boards (not shown) provided inside the screen 110 to connect with a plurality of connectors. The display main body 100 enables the screen 110 to display an image. When an external device is connected to the board assembly unit 200 provided on a part of the main body casing 120, the control part (not shown) provided to the main board recognizes the external device, and displays audio, video and image information of data stored in the external device on the screen depending on the selection of a user. The main body casing 120 covers the display main body 100, and protects the display main body 100 against an external impact so that the display main body 100 stably operates. The main body casing 120 includes a front casing 121 to which the screen 110 is coupled, and a rear casing 123 including a side opening 125 to which the board assembly unit 200 is coupled. The front casing 121 and the rear casing 123 may be vertically provided. Referring to FIG. 1, the rear casing 123 may be inclined with respect to the front casing 121. Here, when the rear casing 123 is inclined with respect to the front casing 121, an AV terminal 216 protruding from the board assembly unit 200 coupled to a side thereof becomes invisible from a front view of the display main body 100 providing the screen 110, thereby simplifying an appearance.

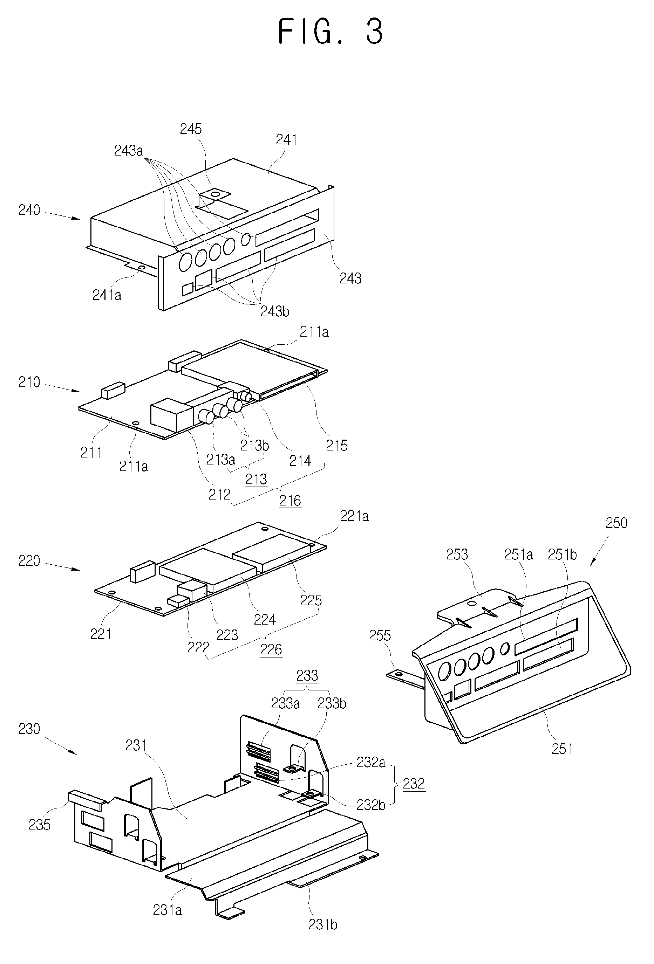

Referring to FIGs. 2 and 3, the board assembly unit 200 includes an AV board 210 including the AV terminal 216, a storing medium connecting board 220 including a storing medium connecting part 226 to which an external memory is mounted, and a board casing 260 supporting the AV board 210 and the storing medium connecting board 220 and coupled to the main body casing 120.

The AV board 210 includes an AV board main body 211 supported by the board casing 260, and at least one AV terminal 216 provided to the AV board main body 211 and connected with an AV connector of an external device. The AV terminal 216 may include a video terminal 213a receiving a video signal of the external device, and an audio terminal 213b receiving an audio signal of the external device. The AV board 210 includes an image signal receiving terminal 212 receiving an image signal obtained by a camcorder, a digital camera, etc., a phone jack 214 connected with an earphone so that audio information of the display main body 100 is transmitted to the earphone, and a smart card mounting part 215 to which a smart card is mounted.

The AV terminals 216 may be singly provided by a kind or type, or a particular type of AV terminal 216 that is used frequently may be provided in a plurality. The AV terminals 216 may be arbitrarily disposed. It is preferable but not necessary that the terminal having a frequent use is disposed to a more easily accessible position. The AV board 210 may comprise other terminals receiving other signals, that is audio/video related signals, from other external devices. The AV terminals 216 have a circular shape. Alternatively, the AV terminals 216 may have a non-circular shape as is necessary.

The AV board main body 211 is coupled to the board casing 260, and is connected with a main board (not shown) of the display main body 100 when the board casing 260 is coupled to the main body casing 120. When the external device is connected to the AV terminals 216, audio, video, image information and data information of the external device are received through the respective AV terminals 216 to be outputted through the screen 110 or a speaker (not shown).

The AV board main body 211 includes a coupling part 211a coupled with a lower casing 230.

The storing medium connecting board 220 includes a memory board main body 221 supported by the board casing 260, and the storing medium connecting part 226 provided to the memory board main body 221 and connected with an external memory. The storing medium connecting part 226 includes a USB (universal serial bus) connector 223 for connection with a USB storing device, an SD (secure digital) card slit 224 for connection with an SD card, and a CF (compact flash) card slit 225 for connection with a CF card. Here, the USB storing device connected to the USB connector 223 comprises a USB memory stick for storing data, and may comprise a PDA, a digital camera, a camcorder, etc. which is capable of being connected to the USB connector 223.

The storing medium connecting board 220 according to the first embodiment of the present invention includes the SD card slit 224, and the CF card slit 225. However, the storing medium connecting board 220 may further include a memory slit which is capable of being connected with an external memory having other types.

The storing medium connecting board 220 may include a data cable mounting part 222 for connection with a data cable for directly receiving data from an external device.

In this case, the storing medium connecting board 220 may singly include the storing medium connecting part 226 by a kind or type, or include a plurality of the type of the storing medium connecting part 226 which are used frequently. The storing medium connecting part 226 of various kinds may be properly disposed in consideration of frequency of use by a user. Since external memories of various kinds may be simultaneously connected to the storing medium connecting part 226, the storing medium connecting parts 226 are preferably distanced from each other to prevent interference among the external memories.

The storing medium connecting board 220 is supported by the board casing 260, and is connected with the main board (not shown) of the display main body 100 when the board casing 260 is mounted to the main body casing 120. Accordingly, when an external memory is connected to the storing medium connecting part 226, audio, video and image data stored in the external memory are outputted through the screen 110 or the speaker depending on the selection of a user.

The board casing 260 includes the AV board 210 and the storing medium connecting board 220, and is coupled to a part of the main body casing 120. Referring to FIG. 1, the board casing 260 is preferably provided on a side away from the main body casing 120 for an easy and better access and an aesthetically pleasing front appearance. Here, the board casing 260 is preferably disposed at a height that is easy for a user to approach depending on the size of the screen 110. For example, in the case of a wall mounted television, the board casing 260 is preferably disposed to have a height easy for user to reach.

The board casing 260 includes the lower casing 230 to which the AV board 210 and the storing medium connecting board 220 are mounted, an upper casing 240 coupled with the lower casing 230, and a cover member 250 coupled with the lower casing 230 and the upper casing 240 and exposed to the outside of the main body casing 120.

The lower casing 230 includes a bottom surface 231, an extended part 231a extended from the bottom surface 231 to the outside, a main body casing coupling part 231b coupled to the main body casing 120, a memory board coupling part 232 coupled with the storing medium connecting board 220, an AV board coupling part 233 coupled with the AV board 210, and a main body coupling part 235 coupled with the display main body 100 when the board assembly unit 200 is inserted to the display main body 100 after assembling is completed.

The bottom surface 231 is flatly provided, and is inserted into the display main body 100 after assembling is completed. The extending part 231a is extended from the bottom surface 231, and is coupled to the front casing 121 of the main body casing 120 after assembling is completed. The memory board coupling part 232 and the AV board coupling part 233 include first and second guiding rails 232a and 233a provided respectively to the opposite sides of the lower casing 230 to be slidably coupled with the AV board 210 and the storing medium connecting board 220, and first and second screw coupling parts 232b and 233b fixedly coupling the AV board 210 and the storing medium connecting board 220 coupled to the guiding rails 232a and 233a to the lower casing 230 by means of screws.

The AV board 210 and the storing medium connecting board 220 according to the first embodiment of the present invention are slidably coupled to the lower casing 230 by means of screws. Alternatively, the AV board 210 and the storing medium connecting board 220 may be coupled to the lower casing 230 by means of other known coupling means.

The storing medium connecting board 220 according to the first embodiment of the present invention is coupled to a lower part of the lower casing 230, and the AV board 210 is coupled above the storing medium connecting board 220. Alternatively, the positions of the AV board 210 and the storing medium connecting board 220 may be exchanged.

The main body coupling part 235 is inserted inside of the display main body 100 and guides a coupling position to be coupled with an inner frame (not shown) when the board assembly unit 200 completed assembly is coupled to the main body casing 120. Accordingly, an assembly process may be simplified when the board assembly unit 200 completed assembly is coupled to the display main body 100.

In this case, the lower casing 230 is preferably formed of an electrically conductive material to intercept an EMI (electromagnetic interference) generated from the display main body 100 when being coupled to the main body casing 120. Accordingly, the EMI generated from the display main body 100 does not affect the AV board 210 and the storing medium connecting board 220, thereby stably operating the boards 210 and 220.

The upper casing 240 is coupled with the lower casing 230 to which the AV board 210 and the storing medium connecting board 220 are mounted. The upper casing 240 includes a board cover part 241 corresponding to an upper surface of the lower casing 230, and a front cover part 243 bent from the board cover part 241 to correspond to the cover member 250.

The board cover part 241 includes a coupling part 241a coupled with the lower casing 230, and a grounding part 245 protruding from a surface thereof to be electrically grounded with the rear casing 123 when being coupled with the main body casing 260. The coupling part 241a is positioned to correspond to the coupling part 211a of the AV board 210, and is together coupled to the lower casing 230. The grounding part 245 contacts with the rear casing 123 to perform grounding when the board assembly unit 200 completely assembled is coupled to the main body casing 120.

The front cover part 243 has a shape corresponding to the cover member 250, and includes insertion holes 243a and 243b having shapes corresponding to the AV terminal 216 of the AV board 210 and the storing medium connecting part 226 of the storing medium connecting board 220 which are mounted to the lower casing 230 so that the AV terminal 216 and the storing medium connecting part 226 protrude to the outside.

In this case, the upper casing 240 is preferably formed of an electrically conductive plastic or a thin metal plate to intercept the EMI generated from the display main body 100. Especially, the upper casing 240 may be formed of an aluminum of lightweight for the board assembly unit 200, or a stiff electrically conductive plastic for lightness, slimness and stiffness. Also, the upper casing 240 may be formed of a slate to raise an EMI intercepting efficiency.

Accordingly, the upper casing 240 intercepts the EMI generated from the display main body 100 to prevent the EMI from flowing into the board assembly unit 200. Since the front cover part 243 covers the cover member 250 except the AV terminal 216 and the storing medium connecting part 226, an EMI generated in the board assembly unit 200 or generated in the display main body 100 is prevented from leaking to the outside. Accordingly, a user can be prevented from being exposed to electromagnetic waves generated by the EMI.

The cover member 250 is coupled with the lower casing 230 and the upper casing 240, and exposes itself outside the main body casing 120. The cover member 250 includes a main body casing coupling part 251 coupled to the main body casing 120, a lower casing coupling part 255 coupled with the lower casing 230, an upper casing coupling part 253 coupled with the grounding part 245 of the upper casing 240, and insertion holes 251a and 251b formed through to correspond to the shapes of the AV terminal 216 and the storing medium connecting part 226. The lower casing coupling part 255 extends toward an inside of the lower casing 230, and is coupled together with the coupling part 211a of the AV board main body 211 and the coupling part 241a of the upper casing 240 in assembling. Accordingly, an assembling process can be simplified and the board assembly unit 200 can be solidly assembled.

Since the cover member 250 is coupled to the main body casing 120 to be exposed to the outside, the cover member 250 is preferably formed of the same material as the main body casing 120 for an external appearance.

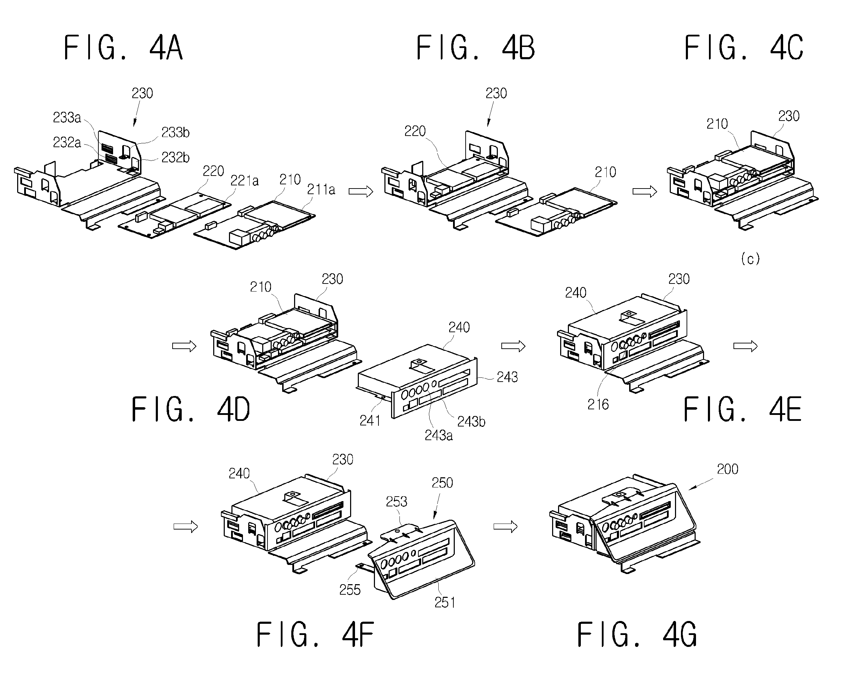

Hereinafter, an assembling process of the display apparatus 1 according to the first embodiment of the present invention will be described by referring to FIGS. 4a - 4g.

Initially, the screen 110 is coupled to the display main body 100. The front casing 121 is coupled to the display main body 100. As shown in FIG. 4a, the board assembly unit 200 is assembled.

At first, referring to FIG. 4b, the storing medium connecting board 220 is inserted to the first guiding rail 232a of the lower casing 230. Here, the storing medium connecting board 220 is inserted so that the position of the first screw coupling part 232b of the lower casing 230 and the position of the coupling part 221a of the storing medium connecting board 220 correspond to each other, and then the storing medium connecting board 220 is fixedly coupled to the lower casing 230 by a screw.

Then, referring to FIG. 4c, the AV board 210 is inserted to the second guiding rail 233a provided above the storing medium connecting board 220. Here, the coupling part 211a of the AV board 210 and the second screw coupling part 233b of the lower casing 230 are arranged so that the positions thereof correspond to each other, and a screw coupling is not performed.

Referring to FIGS. 4d and 4e, the lower casing 240 is coupled to an upper part of the lower casing 230. Here, the AV terminal 216 of the AV board 210 and the storing medium connecting part 226 of the storing medium connecting board 220 are disposed to be coupled so that the AV terminal 216 and the storing medium connecting part 226 are exposed to the outside through the insertion holes 243a and 243b of the front cover part 243. Also, the coupling part 241a of the upper casing 240 is arranged with respect to the second screw coupling part 233b of the lower casing 230 to correspond to the coupling part 211a of the AV board 210.

Referring to FIGS. 4f and 4g, under this state, the cover member 250 is arranged to be coupled to correspond to the front cover part 243, and the upper casing coupling part 253 is coupled to the grounding part 245. Then, the lower casing coupling part 255 is arranged to correspond to the coupling part 241a of the upper casing 240, the second screw coupling part 233b of the lower casing 230 and the coupling part 211a of the AV board 210, and is coupled together therewith by a screw to complete the assembly.

The board assembly unit 200 completely assembled is inserted to a frame of the display main body 100. At this stage, the main body coupling part 235 of the lower casing 230 is slidingly coupled to the frame of the display main body 100, and the board assembly unit 200 is supported to the display main body 100. Then, the main body casing coupling part 231b of the lower casing 230 is fixedly coupled with the main body casing 120 by a screw coupling. Then, the rear casing 123 of the main body casing 120 is coupled to the front casing 121 to completely assemble the display apparatus 1.

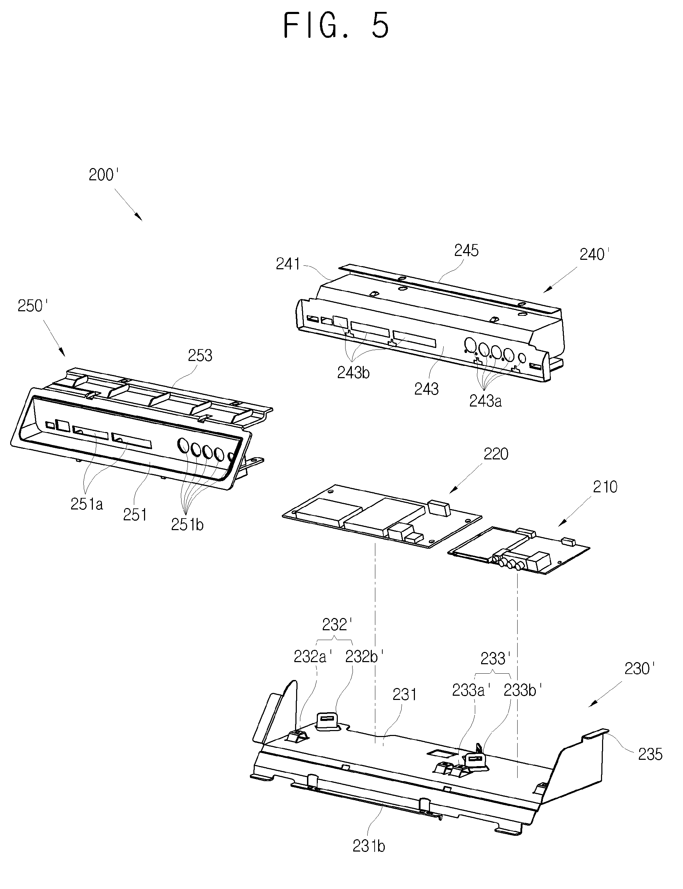

Hereinafter, a board assembly unit according to a second embodiment of the present invention will be described by referring to FIG. 5.

As shown in FIG. 5, in a board assembly unit 200' according to a second embodiment of the present invention, an AV board 210 and a memory board 220 are horizontally coupled to a lower casing 230'. Accordingly, the thickness of the board assembly unit 200' can become smaller, and the thickness of a main body casing 120 can become smaller.

Here, a storing medium connecting board coupling part 232' of the lower casing 230' and an AV board coupling part 233' are directly coupled by a screw coupling instead of a sliding coupling like in the first embodiment of the present invention. An upper casing 240' and a cover member 250' may have the same configurations as in the first embodiment of the present invention.

The board assembly unit 200 according to the exemplary embodiments of the present invention includes two functional boards of the AV board 110 and the memory board 120. Alternatively, the board assembly unit 200 may further include other functional boards performing additional functions. Also, the board assembly unit 200 according to the present invention may be applied to other types of televisions, a monitor, etc. instead of the PDP television.

As described above, a display apparatus according to the present invention allows an AV board and a memory board having different functions to be supported together on a board casing provided at a side of a main body casing, thereby providing for easy connection of an external device.

Also, a display apparatus consistent with the present invention supports functional boards at an inside of a board casing to be assembled to a main body, thereby simplifying an assembling process and raising productivity.

Also, a display apparatus consistent with the present invention provides a board casing formed of material which is capable of intercepting an EMI, thereby raising an EMI intercepting efficiency and a stability in operating the functional board.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A display apparatus comprising:
a display main body;
a main body casing which covers the display main body; and
a board assembly unit which is coupled to the main body casing and which supports an input signal board comprising an input signal terminal operative to be connected with an input signal cable for receiving an input signal of an external device, and a storing medium connecting board comprising a storing medium connecting part operative to be coupled with an external storing medium.

2. The display apparatus according to claim 1, wherein the board assembly unit is coupled to a side of the main body casing so that the input signal terminal and the storing medium connecting part are exposed.

3. The display apparatus according to claim 1, wherein the input signal comprises at least one of an audio signal and a video signal.

4. The display apparatus according to claim 1, wherein the input signal terminal comprises at least one of a video terminal for receiving a video signal of an external device, an audio terminal for receiving an audio signal of an external device, a smart card mounting part to which a smart card is operative to be mounted, and an image signal terminal for receiving an image signal of an external device.

5. The display apparatus according to claim 1, wherein the storing medium connecting part comprises at least one of a USB connector to which a USB storing device is operative to be connected, an SD card reader to which an SD card is operative to be mounted, and a CF card reader to which a CF card is operative to be mounted.

6. The display apparatus according to claim 1, wherein the board assembly unit comprises:
a lower casing mounted to the input signal board and the storing medium connecting board;
an upper casing coupled with the lower casing so that an opened part thereof is formed in one side; and
a cover member coupled to the lower casing and the upper casing and covering the opened part.

7. The display apparatus according to claim 6, wherein the lower casing comprises an input signal board coupling part and a storing medium connecting board coupling part to which the input signal board and the storing medium connecting board are respectively mounted.

8. The display apparatus according to claim 7, wherein one of the input signal board coupling part and the storing medium connecting board coupling part is coupled together with the cover member and upper casing.

9. The display apparatus according to claim 6, wherein the upper casing comprises material capable of intercepting an electromagnetic interference (EMI) generated from the display main body.

10. The display apparatus according to claim 6, wherein the lower casing comprises material capable of intercepting an electromagnetic interference (EMI) generated from the display main body.

11. The display apparatus according to claim 6, wherein the upper casing comprises a board cover part covering the input signal board and the storing medium connecting board mounted to the lower casing, and a front cover part bent from the board cover part to correspond to the cover member.

12. The display apparatus according to claim 6, wherein the cover member comprises an insertion hole having shapes corresponding to the input signal terminal and the storing medium connecting part so that the input signal terminal provided to the input signal board and the storing medium connecting part provided to the storing medium connecting board protrude outside the main body casing.

13. A display apparatus, comprising:
a display main body;
a main body casing which accommodates the display main body; and
a board assembly unit provided to the main body casing and which supports an input signal board comprising an input signal terminal operative to be connected with an input signal cable of an external device, and a storing medium connecting board comprising a storing medium connecting part operative to be coupled with an external storing medium, said board assembly unit intercepting an electromagnetic interference (EMI) that is flowing toward the input signal board and the storing medium connecting board.

14. The display apparatus according to claim 13, wherein the board assembly unit comprises:
a lower casing which supports the input signal board and the storing medium connecting board; and
an upper casing corresponding to the lower casing, and covering the input signal board and the storing medium connecting board.

15. The display apparatus according to claim 13, wherein the display main body comprises one of a liquid crystal display (LCD) module and a plasma display panel (PDP) module.

16. The display apparatus according to claim 13, wherein the board assembly unit is coupled to a side of the main body casing so that the input signal terminal and the storing medium connecting part are exposed.

17. The display apparatus according to claim 14, wherein the input signal board and the storing medium connecting board are parallel coupled to the lower casing.

18. The display apparatus according to claim 14, wherein the input signal board and the storing medium connecting board are stacked to be coupled to the lower casing.
